# EUROPEAN PATENT SPECIFICATION

(11) **EP 2 975 832 B1**
(45) Date of publication and mention of the grant of the patent: **23.12.2020**
(21) Application number: 13877665.3
(22) Date of filing: 20.11.2013
(51) Int. Cl.: F25D 29/00

(54) **HOME ELECTRICAL APPLIANCE**
ELEKTRISCHES HAUSHALTSGERÄT
APPAREIL ÉLECTRIQUE DOMESTIQUE

(30) Priority: 11.03.2013 JP 2013047924
(43) Date of publication of application: 20.01.2016
(73) Proprietor: Toshiba Lifestyle Products & Services Corporation, Kawasaki-shi, Kanagawa 210-0007 (JP)
(72) Inventor: MARUTANI, Yuuki, Tokyo 105-8001 (JP); FURUTA, Kazuhiro, Tokyo 105-8001 (JP)
(74) Representative: Henkel & Partner mbB
(86) International application number: PCT/JP2013/081282
(87) International publication number: WO 2014/141538

(56) References cited:
- EP-A1- 2 975 342
- EP-A2- 2 511 634
- WO-A1-2012/068526
- JP-A- 2003 004 366
- JP-A- 2003 172 578
- JP-A- 2012 164 246
- US-A1- 2002 007 486

## Description

### TECHNICAL FIELD

Embodiments of the present invention relates to a home electrical appliance.

### BACKGROUND

Home electrical appliances are known in which a communication means is provided for communicating with external devices. Various forms of use are being suggested with an assumption that such home electrical appliances are connected to a network, etc (See for example, patent document 1).

EP 2975342 A1, which has been published January 20, 2016 and claims priority of March 12, 2013, EP 2511634 A2 and WO 2012 068526 A1 disclose respective refrigerators comprising communication functions and sleep modes for saving power. In the sleep mode various functions of the refrigerator, like the operation of a compressor, am ice machine or a fan are powered down. JP 2012 164246 disclose a communication system. A further refrigerator with a communication device according to the preamble of claim 1 is disclosed in US 2002 0007486 A1.

### PRIOR ART DOCUMENTS

### PATENT DOCUMENT

Patent Document 1: JP 2011-180868 A

### SUMMARY OF THE INVENTION

### PROBLEMS TO BE OVERCOME BY THE INVENTION

However, some users do not have access to the network or do not feel the need to connect to the network. Thus, in a configuration designed to connect to the network as disclosed in patent document 1, electric power is supplied to the communication means and the functional portion working by utilizing the communication means, resulting in meaningless consumption of electric power.

The problem to be overcome by the present invention is providing a home electric appliance capable of suppressing meaningless increase in power consumption while being equipped with communication means.

### MEANS FOR OVERCOMMING THE PROBLEMS

According to the present invention the above object is achieved by the home electric appliance according to claim 1. The dependent claims are directed to different advantageous aspects of the invention. A home electrical appliance of one embodiment is provided with a functional portion being provided with a communication unit configured to communicate with an external device and operating with a prerequisite of using the communication unit; a setting specifying portion configured to specify a setting to permit operation of the functional portion; and a control portion configured to limit operation of the functional portion until the setting to permit operation of the functional portion is specified from the setting specifying portion.

### BRIEF DESCRIPTIONS OF THE DRAWINGS

[FIG.1] FIG.1 briefly illustrates a home appliance network provided with a home electrical appliance
[FIG.2] FIG.2 schematically illustrates the structure of a refrigerator.
[FIG.3] FIG.3 indicates the process flow of a communication permit process of a refrigerator.

### EMBODIMENTS OF THE INVENTION

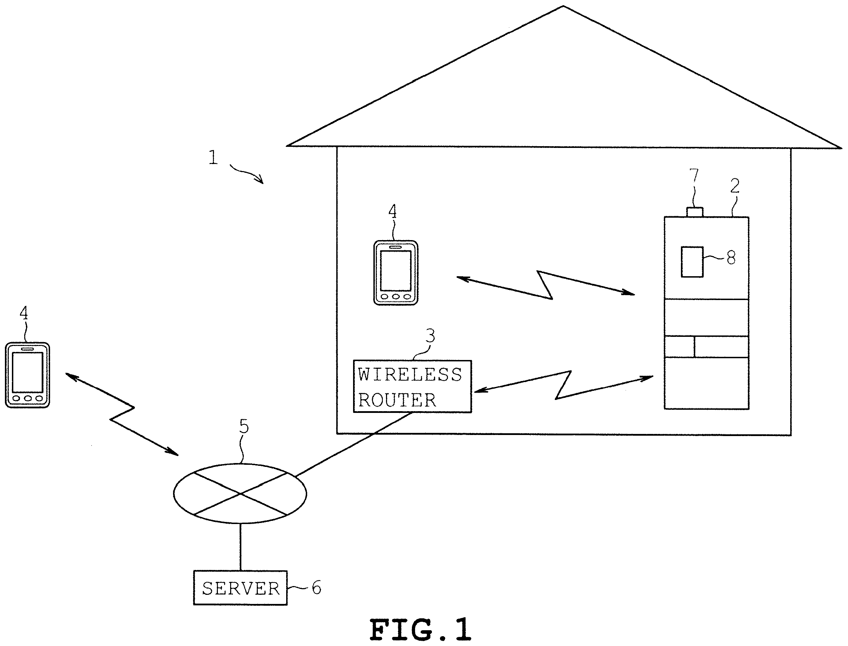

A description is given hereinafter of a home electrical appliance with reference to FIGS.1 to 3.

As illustrated in FIG. 1, home appliance network 1 employing the home electrical appliance of the present embodiment is provided with a refrigerator 2, a wireless router 3, a communication terminal 4, a network 5, and a server 6. The refrigerator 2 is one example of a home electrical appliance. The wireless router 3 communicates with the refrigerator 2 through a wireless communication method. The communication terminal 4 communicates with the refrigerator 2 or the wireless router 3 through a wireless communication method. The wireless router 3 is connected to the network 5 which is in turn connected to the server 6. Further, the refrigerator 2 is capable of communicating with the communication terminal 4 over the network. The wireless router 3, the communication terminal 4, and the server 6 are examples of external devices recited in the claims.

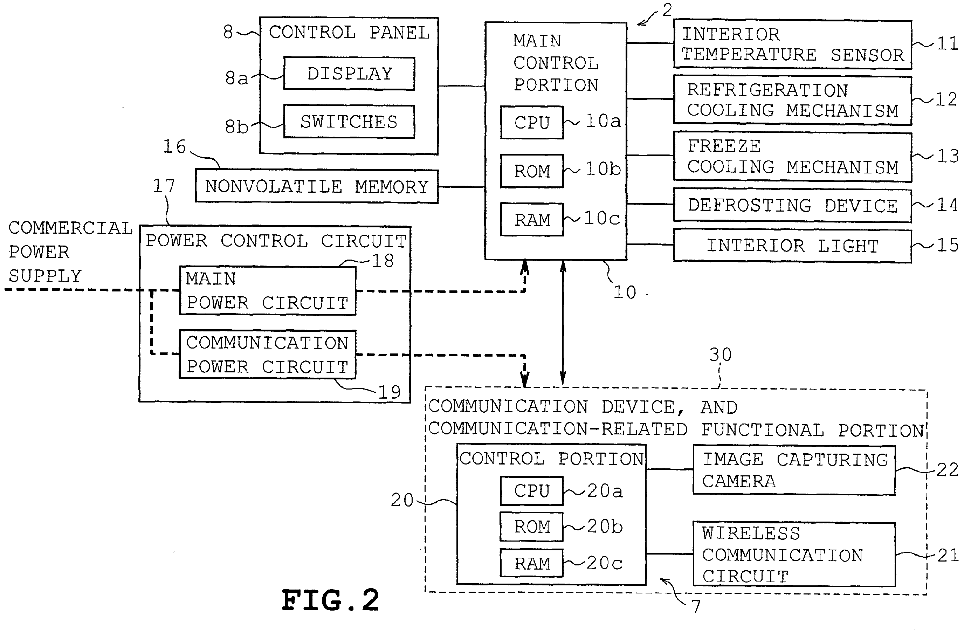

The refrigerator 2 is a home electrical appliance normally used by continuously receiving supply of power. The refrigerator 2 is provided with a communication device 7 and a control panel 8 and communicates with external devices through the communication device 7 while receiving input of various settings through the control panel 8. The refrigerator 2 is provided with a main control portion 10 as illustrated in FIG.2. The main control portion 10 is connected to components such as the control panel 8, interior temperature sensor 11, refrigerating cooler 12, freezing cooler 13, defrost device 14, interior light 15, nonvolatile memory 16, and power control circuit 17.

The main control portion 10 is configured by a microcomputer provided with components such as a CPU 10a, ROM 10b, and RAM 10c. As known, the main control portion 10 implements the basic and inherent functionality of the refrigerator 2 of storing food at appropriate temperatures based on the settings inputted through the control panel 8 and temperature of the interior of the refrigerator detected by the interior temperature sensor 11.

The control panel 8 is provided for example with a display 8a configured by a liquid crystal panel, LED, etc. and switches 8b allowing user input of settings, etc. The control panel 8 is configured to allow input of various refrigerator 2 settings and to display various information such as the operational status of the refrigerator 2. Further, the control panel 8 of the present embodiment allows input of settings to permit the use of the communication device 7 and displays (presents) the status of use (operational status) of the communication device 7. The control panel 8 is one example of settings specifying portion recited in the claims and the display 8a is one example of presenting unit.

The nonvolatile memory 16 stores the settings, etc. inputted from the control panel 8. The settings stored in the nonvolatile memory 16 is maintained even when power is cutoff. Thus, even when power is temporarily cutoff by power failure for example, the main control portion 10 is capable of resuming the control of the refrigerator 2 by reading the settings from the nonvolatile memory 16 once power conduction has been restarted. The nonvolatile memory 16 is one example of a nonvolatile storage recited in the claims.

In accordance with the invention the power control circuit 17 is provided with a main power circuit 18 and a communication power circuit 19. The main power circuit 18 is a power circuit configured to realize the inherent functionalities of the refrigerator 2 such as the functionalities of the main control portion 10 and continuously supplies power to the main control portion 10 side.

The communication power circuit 19, on the other hand, is a power circuit for the communication device 7 and a communication-related functional portion (hereinafter referred to as a functional portion 30 encompassing the communication device 7 for convenience) operating by utilizing the communication device 7 and supplies power to the functional portion 30 including the communication device 7 based on the instructions given by the main control portion 10. The power control circuit 17 as well as the main control portion 10 is one example of a power control portion recited in the claims.

In the present invention the main control portion 10 permits energization of the functional portion 30 side, when a setting is made from the control panel 8 to use the communication device 7. Stated differently, the main control portion 10 limits the operation of the functional portion 30 by cutting off supply of power to the functional portion 30 until a setting is made from the control panel 8 to use the communication device 7. Even more specifically, a setting indicating that the functional portion 30 is not used is made to the refrigerator 2 at factory shipment and the supply of power to the functional portion 30 side is cutoff until the refrigerator 2 is installed in the user's home and a setting is made by the user to use the functional portion 30. Thus, the functional portion 30 will not operate by simply plugging the refrigerator 2.

Examples of the functional portion 30 include a control portion 20 and a wireless communication circuit 21 configuring the communication device 7 and an image capturing camera 22 connected to the communication device 7. The control portion 20 is provided with components such as a CPU 20a, a ROM 20b, and a RAM 20c and is configured to control the wireless communication circuit 21 and the image capturing camera 22. In the present embodiment, the image capturing camera 22 is configured to capture the image inside the refrigerator 2 and the captured image is transmitted to the communication terminal 4, the server 6, or the like via the communication device 7. That is, the image capturing camera 22 operates with a prerequisite that the communication device 7 is used. Stated differently, the image capturing camera 22 implements optional functionalities of the refrigerator 2 and not the inherent functionalities of the refrigerator 2 described earlier and thus, need not operate on its own if the communication device 7 is not operated.

Next, a description will be given on the working of the above described configuration.

The refrigerator 2 consumes approximately several tens of W of electric power under normal operation. Though power consumption per unit time is less compared to home electrical appliances such as a microwave oven, cumulative power consumption is categorized as being large since it requires continuous supply of power. Thus, various measures are taken for reducing power consumption in a home electrical appliance such as the refrigerator 2 being used with continuous supply of power. However, even if power consumption per unit time of the communication device 7 under normal operation is 1W or less for example, cumulative power consumption increases to a sizeable amount when power is continuously supplied. Thus, while useful functionalities (such as viewing the image of the interior of the refrigerator from a remote location) can be implemented by providing the communication device 7 connected to a home network, those who do not require such functionalities will incur unnecessary increase in power consumption.

The refrigerator 2 is configured to suppress unnecessary increase in power consumption as described below.

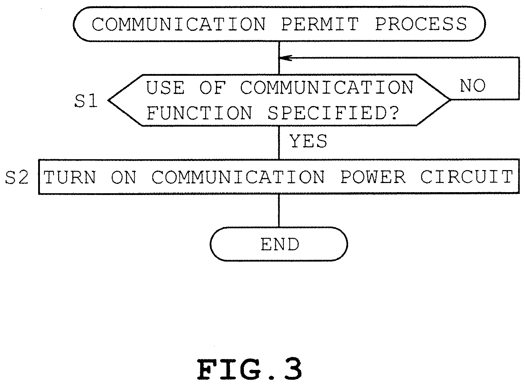

In the communication permit process indicated in FIG.3, the refrigerator 2 turns ON the communication power circuit 19 (S2) by permitting energization of the functional portion 30 side when a setting is made to use the functional portion 30, that is, when a setting is made to use the communicating function (S1: YES) . As a result, energization of the functional portion 30 side is started to place the functional portion 30 in an operable state (the operation of functional portion 30 is permitted). The setting specified to permit the operation of functional portion 30 is stored in the nonvolatile memory 16 and thus, the operation of functional portion 30 will resume once power is re-supplied even if supply of power to the refrigerator 2 is temporarily cutoff by power failure, etc.

As described above, the refrigerator 2 is configured to determine whether or not to operate the functional portion 30 based on user operation.

The refrigerator 2 described above provides the following effects.

The refrigerator 2 is configured to limit the operation of the functional portion 30 until a setting is made from the control panel 8 to permit operation of the functional portion 30. It is thus, possible to suppress increase of power consumption when the functional portion 30 is not used.

In such case, supply of power to the functional portion 30 including the communication device 7 is shut down in the present embodiment. It is thus, possible to reduce unnecessary power consumption to zero.

The nonvolatile memory 16 is provided for storing the settings to permit or not permit the operation of the functional portion 30. Thus, once a setting to permit the operation of functional portion 30 is specified (i.e. to use the functional portion 30), it is possible to use the functional portion 30 without performing resetting operations when supply of power to the refrigerator 2 is resumed after being temporarily cutoff.

The operation to permit the activation of the functional portion 30 can be made from the control panel 8. Thus, such operation can be implemented in any given manner through the refrigerator 2 alone without degrading the usability of the refrigerator 2 for users who wish to use the functional portion 30.

Because power is continuously supplied to the refrigerator 2 when in use, power consumption increases meaninglessly when a setting is made in the initial setting to use the functional portion 30. This works to the disadvantage of users who do not wish to use the functional portion 30 or who were not aware of the spontaneous operation of the functional portion 30. It is thus, possible to resolve such meaningless increase of power consumption in the present embodiment by making a setting to not use the functional portion 30 at the time of factory shipment.

It is further possible to prevent the increase of power consumption even when the communication device 7 is configured by a wireless communication method and the status of communication is invisible, that is, when the user is not aware of the communication device 7 being activated by limiting the operation of the functional portion 30 until a setting has been made to permit the operation of the functional portion 30.

Further, since the operational status of the communication device 7 is presented to the user by being displayed to the control panel 8, it is possible to learn that the functional portion 30 is in operation for users who wish to use the functional portion 30 and that the functional portion 30 is not in operation for users who do not wish to use the functional portion 30 even when a wireless communication method is being employed.

The present invention is not limited to the examples given in the foregoing embodiment but may be modified or expanded as follows. All or some of the examples of modifications and expansions given below may be combined.

In one example, the image capturing camera 22 configured to capture the image of the interior of the refrigerator was given as an example of the functional portion 30. The functional portion 30 is not limited to the image capturing camera 22 but may be a component to implement a security system monitoring the exterior of the refrigerator or a component to implement a voice/sound communication system for example.

In one example, an example was given in which supply of power to the functional portion 30 was cutoff. Alternatively, the functional portion 30 may be made to operate in a power saving mode such as the so-called sleep mode by reducing the supply of power below the level of power required to run the functional portion 30 in a normal operation mode. In such case, the supply of power to the functional portion 30 may be increased to the level which would allow the functional portion 30 to run in the normal operation mode once a setting is made to permit the operation of the functional portion 30.

It is further possible to suppress the increase of power consumption by determining whether or not to permit the operation of the functional portion 30 by making a switch between an energization mode in which power is supplied intermittently in a 15 minute interval for example and an energization mode in which power is supplied continuously.

In one example, an example was given in which permission to operate the functional portion 30 was given through the control panel 8. Alternatively, a permission to operate the communication device 7 may be given instead of the functional portion 30. Since various configurations as well as various functionalities are conceivable for the functional portion 30, it is possible to activate the functionalities utilizing the communication device 7 by making a setting to activate (permit operation) of the communication device 7.

In one example, the refrigerator 2 was given as an example of a home electrical appliance. However, similar effects may be obtained in an air conditioner application for example. Further, the example provides an outstanding effect of suppressing the increase of power consumption when employed in a home electrical appliance running with a power consumption of approximately 100 W or less in normal operation, that is, when employed in a home electrical appliance in which the percentage of power consumed by the communication device 7 is large with respect to the power consumed for implementing the inherent functionalities of the home electrical appliance.

The so-called wireless LAN, Bluetooth (registered trade mark), Wifi (registered trademark), or the like, may be employed as the wireless communication method. Further, any given wire communication such as LAN, USB (registered trademark), power line communication, or the like, may be used as a communication unit.

The examples described are not intended to limit the scope of the invention. Indeed, the invention described herein may be embodied in a variety of other forms; furthermore, various omissions, substitutions and changes in the form of the embodiments described herein may be made without departing from the scope of the invention as claimed. The accompanying claims are intended to cover such forms or modifications as would fall within the scope and spirit of the inventions.

### EXPLANATION OF REFERENCE SYMBOLS

In the figures, reference symbol 2 represents a refrigerator (home electrical appliance); 3, a wireless router (external device); 4, a communication terminal (external device) ; 6, a server (external device) ; 7, a communication device (communication unit); 8, a control panel (setting specifying portion, presenting unit); 10, a main control portion (control portion, power control portion); 16, a nonvolatile memory (nonvolatile storage portion); 17, a power control circuit (power control portion); 19, a communication power circuit (power control portion),; 21, a wireless communication circuit (communication unit) ; 22, an image capturing camera (functional portion); and 30, a functional portion.

## Claims

1. A home electrical appliance comprising:
a main control portion (10) of the home appliance configured to operate the home appliance;
a functional portion (30) being provided with a communication unit (7, 21) configured to communicate with an external device (4) and a control portion (20) of the functional portion (30), wherein the home electrical appliance is configured so that power to the functional portion (30) including the communication unit (7, 21) is cut off and the operation of the functional portion (30) and the operation of the communication unit are not permitted until a setting is made;
a setting specifying portion (8) configured to specify a setting to permit operation of the functional portion (30); and **characterized by**
a power control circuit (17) provided with a main power circuit (18) configured to supply power to the main control portion (10) of the home appliance and a communication power circuit (19) configured to supply power to the functional portion (30), the power control circuit (17) being configured to control supply of power to functional portion (30);
the main control portion (10) being configured to disable the functional portion (30) until the setting to permit operation of the functional portion (30) is specified from the setting specifying portion (8),
whereas the main control portion (10) being configured to start supply of power to the functional portion (30) and enable the operation of the functional portion (30) in response to the setting to permit the operation of the functional portion (30) being specified.

2. The home electrical appliance according to claim 1, further comprising a nonvolatile storage portion (16) configured to store a setting indicating whether not to permit operation of the functional portion (30), wherein the main control portion (10) is configured to determine whether or not to limit operation of the functional portion (30) according to the setting stored in the nonvolatile storage portion (16).

3. The home electrical appliance according to any one of claims 1 or 2, wherein a continuous supply of power is provided for the home electrical appliance.

4. The home electrical appliance according to any one of claims 1 to 3, wherein the communication unit (7, 21) is configured to employ a wireless communication method.

5. The home electrical appliance according to any one of claims 1 to 4, further comprising a presenting unit (8a) configured to present an operational status of the communication unit (7, 21) or the functional portion (30).

## Patentansprüche

1. Ein elektrisches Haushaltsgerät, umfassend:
einen Hauptsteuerteil (10) des Haushaltsgeräts, der für den Betrieb des Haushaltsgeräts konfiguriert ist;
einen Funktionsteil (30), der mit einer Kommunikationseinheit (7, 21), die zur Kommunikation mit einer externen Vorrichtung (4) ausgestaltet ist, und einem Steuerteil (20) des Funktionsteils (30) versehen ist, wobei das elektrische Haushaltsgerät so konfiguriert ist, dass die Stromversorgung des Funktionsteils (30) einschließlich der Kommunikationseinheit (7, 21) unterbrochen wird und der Betrieb des Funktionsteils (30) und der Betrieb der Kommunikationseinheit nicht gestattet sind, bis eine Einstellung vorgenommen wird;
einen Einstellungsspezifizierungsteil (8), der so konfiguriert ist, dass er eine Einstellung spezifiziert, um den Betrieb des Funktionsteils (30) zu ermöglichen; und **gekennzeichnet durch**
eine Leistungssteuerschaltung (17), die mit einer Hauptleistungsschaltung (18) versehen ist, die so konfiguriert ist, dass sie das Hauptsteuerteil (10) des Haushaltsgeräts Leistung zuführt, und einer Kommunikationsleistungsschaltung (19), die so konfiguriert ist, dass sie dem Funktionsteil (30) Leistung zuführt, wobei die Leistungssteuerschaltung (17) so konfiguriert ist, dass sie die Zufuhr von Leistung zum Funktionsteil (30) steuert;
wobei der Hauptsteuerteil (10) so konfiguriert ist, dass er den Funktionsteil (30) deaktiviert, bis die Einstellung, die den Betrieb des Funktionsteils (30) erlaubt, von dem Einstellungs-Spezifizierungsteil (8) spezifiziert wird,
wobei der Hauptsteuerteil (10) so konfiguriert ist, dass er die Stromversorgung des Funktionsteils (30) startet und den Betrieb des Funktionsteils (30) als Reaktion auf die Einstellung ermöglicht, um den Betrieb des Funktionsteils (30) zu ermöglichen, der spezifiziert ist.

2. Elektrisches Haushaltsgerät nach Anspruch 1, das ferner einen nichtflüchtigen Speicherteil (16) umfasst, der so konfiguriert ist, dass er eine Einstellung speichert, die anzeigt, ob der Betrieb des Funktionsteils (30) nicht zugelassen werden soll, wobei der Hauptsteuerteil (10) so konfiguriert ist, dass er bestimmt, ob der Betrieb des Funktionsteils (30) entsprechend der in dem nichtflüchtigen Speicherteil (16) gespeicherten Einstellung begrenzt werden soll oder nicht.

3. Das elektrische Haushaltsgerät nach einem der Ansprüche 1 oder 2, wobei eine kontinuierliche Stromversorgung für das elektrische Haushaltsgerät vorgesehen ist.

4. Das elektrische Haushaltsgerät nach einem der Ansprüche 1 bis 3, wobei die Kommunikationseinheit (7, 21) so konfiguriert ist, dass sie ein drahtloses Kommunikationsverfahren verwendet.

5. Das elektrische Haushaltsgerät nach einem der Ansprüche 1 bis 4, ferner mit einer Präsentationseinheit (8a), die so konfiguriert ist, dass sie einen Betriebszustand der Kommunikationseinheit (7, 21) oder des Funktionsteils (30) darstellt.

## Revendications

1. Appareil électroménager comprenant :
une partie de commande principale (10) de l'appareil ménager configurée pour faire fonctionner l'appareil ménager ;
une partie fonctionnelle (30) qui est pourvue d'une unité de communication (7, 21) configurée pour communiquer avec un dispositif externe (4), et d'une partie de commande (20) de la partie fonctionnelle (30),
dans lequel l'appareil électroménager est configuré de sorte qu'une puissance délivrée à la partie fonctionnelle (30) comportant l'unité de communication (7, 21) soit coupée et que le fonctionnement de la partie fonctionnelle (30) et le fonctionnement de l'unité de communication ne soient pas autorisés jusqu'à ce qu'un paramétrage soit fait ;
une partie de spécification de paramétrage (8) configurée pour spécifier un paramétrage pour permettre le fonctionnement de la partie fonctionnelle (30) ;
et
**caractérisé par**
un circuit de commande de puissance (17) pourvu d'un circuit de puissance principal (18) configuré pour alimenter en puissance la partie de commande principale (10) de l'appareil ménager, et un circuit de puissance de communication (19) configuré pour alimenter en puissance la partie fonctionnelle (30), le circuit de commande de puissance (17) étant configuré pour commander l'alimentation de la partie fonctionnelle (30) ;
la partie de commande principale (10) étant configurée pour désactiver la partie fonctionnelle (30) jusqu'à ce que le paramétrage pour permettre le fonctionnement de la partie fonctionnelle (30) soit spécifié par la partie de spécification de paramétrage (8),
considérant que la partie de commande principale (10), qui est configurée pour démarrer l'alimentation en puissance de la partie fonctionnelle (30) et activer le fonctionnement de la partie fonctionnelle (30) en réponse au paramétrage pour permettre le fonctionnement de la partie fonctionnelle (30), est spécifiée.

2. Appareil électroménager selon la revendication 1,
comprenant en outre une partie de stockage non volatile (16) configurée pour stocker un paramétrage indiquant s'il ne faut pas permettre le fonctionnement de la partie fonctionnelle (30), dans lequel la partie de commande principale (10) est configurée pour déterminer s'il faut limiter ou non le fonctionnement de la partie fonctionnelle (30) selon le paramétrage stocké dans la partie de stockage non volatile (16).

3. Appareil électroménager selon l'une quelconque des revendications 1 ou 2, dans lequel une alimentation en tension continue est fournie à l'appareil électroménager.

4. Appareil électroménager selon l'une quelconque des revendications 1 à 3, dans lequel l'unité de communication (7, 21) est configurée pour employer un procédé de communication sans fil.

5. Appareil électroménager selon l'une quelconque des revendications 1 à 4, comprenant en outre une unité de présentation (8a) configurée pour présenter un statut de fonctionnement de l'unité de communication (7, 21) ou de la partie fonctionnelle (30).
